# FASCICULE DE BREVET EUROPEEN

(11) **EP 4 426 575 B1**
(45) Date de publication et mention de la délivrance du brevet: **08.04.2026**
(21) Numéro de dépôt: 22813234.6
(22) Date de dépôt: 03.11.2022
(51) Int. Cl.: B60K 28/02, B60W 50/14, B60K 28/06, B60W 10/18

(54) **PROCÉDÉ DE PILOTAGE D'UN VÉHICULE AUTOMOBILE EN CAS DE NON-ACTIVITÉ DU CONDUCTEUR**
VERFAHREN ZUR STEUERUNG EINES KRAFTFAHRZEUGS IM FALLE EINER FAHRERINAKTIVITÄT
METHOD FOR CONTROLLING A MOTOR VEHICLE IN CASE OF DRIVER INACTIVITY

(30) Priorité: 05.11.2021 FR 2111774
(43) Date de publication de la demande: 11.09.2024
(73) Titulaire: Ampere SAS, 92100 Boulogne-Billancourt (FR)
(72) Inventeur: BROSSARD, Luc, 78084 Guyancourt cedex (FR); DAVINS, Joan, 78084 Guyancourt cedex (FR)
(74) Mandataire: Renault Group
(86) Numéro de dépôt international: PCT/EP2022/080687
(87) Numéro de publication internationale: WO 2023/079007

(56) Documents cités:
- DE-A1- 102012 206 725
- DE-A1- 102013 009 339

## Description

### DOMAINE TECHNIQUE DE L'INVENTION

La présente invention concerne de manière générale les aides à la conduite de véhicules automobiles.

Elle concerne plus particulièrement un procédé de pilotage d'un véhicule automobile lorsque ce dernier roule à une vitesse qui est régulée de manière automatique et en une position latérale sur sa voie de circulation qui est pilotée de manière automatique.

L'invention trouve une application particulièrement avantageuse lorsque le véhicule se trouve dans des embouteillages et qu'il roule à basse vitesse.

Elle concerne également un véhicule automobile équipé de systèmes permettant de mettre en œuvre le procédé de pilotage précité.

### ETAT DE LA TECHNIQUE

Il est désormais bien connu d'équiper les véhicules automobiles de systèmes autonomes permettant de réaliser des tâches de façon automatique (c'est-à-dire sans intervention du conducteur).

L'un de ces systèmes est prévu pour aider le conducteur à conduire son véhicule dans un embouteillage à basse vitesse. Ce système est communément désigné par le sigle anglais TJP (pour « Traffic Jam pilot »).

Ce système assure un contrôle longitudinal du véhicule de manière que ce dernier reste à une distance suffisante du véhicule qui le précède, et un contrôle latéral permettant au véhicule de rester au centre de sa voie de circulation.

La manière dont le conducteur délègue la conduite et dont le dispositif électronique de pilotage rend la main au conducteur sont tout à fait essentielles pour la qualité de la prestation, ainsi que pour la sûreté de fonctionnement du système. Il a alors déjà été développé des procédures d'activation et de désactivation de ces dispositifs, comme cela est par exemple détaillé dans le document FR3005925.

La solution présentée dans ce document n'est toutefois pas aussi sûre que souhaité.

En effet, le système TPJ a pour fonction d'aider le conducteur à conduire son véhicule dans les embouteillages, et non pas de remplacer le conducteur. Dès lors, le conducteur doit continuer à assurer une surveillance du comportement de son véhicule compte tenu de l'environnement extérieur. On cherche donc une solution permettant de superviser le système TPJ, compte tenu du comportement du conducteur. On connaît également le document DE 10 2013 009339 A1, qui décrit un procédé très spécifique permettant, en cas de problème d'attention ou de santé du conducteur, d'avertir ce dernier puis de reprendre le contrôle du véhicule. On connait aussi le document DE 10 2012 206725 A1, qui décrit une stratégie bien spécifique d'alerte en cas de perte d'attention du conducteur.

### PRESENTATION DE L'INVENTION

La présente invention propose alors, lorsque le conducteur cesse d'exercer activement la surveillance requise, d'attirer son attention sur son rôle voire, si le conducteur ne reprend pas son rôle, de commander l'arrêt du véhicule.

En d'autres termes, la présente invention porte sur une fonctionnalité dite MRM (de l'anglais « Minimum Risk Maneuver ») qui permet de réaliser la surveillance, la mise en oeuvre d'alerte(s) à l'adresse du conducteur et l'arrêt du véhicule en cas de besoin, et qui s'applique à un système TJP déjà existant.

Plus particulièrement, on propose selon l'invention un procédé de pilotage d'un véhicule automobile comprenant, lorsque le véhicule automobile roule à une vitesse qui est régulée de manière automatique et que la position latérale du véhicule automobile dans sa voie de circulation est pilotée de manière automatique (plus particulièrement lorsque le système TJP est activé), une opération d'acquisition en boucle d'un niveau de vigilance du conducteur du véhicule automobile, puis, si le niveau de vigilance est insuffisant, des étapes de :
- déclenchement d'au moins une alerte visuelle et/ou sonore, puis, si le niveau de vigilance reste insuffisant après une première durée déterminée,
- génération d'une série d'au moins un à-coup de freinage, puis, si le niveau de vigilance reste insuffisant après une deuxième durée déterminée,
- freinage du véhicule automobile jusqu'à l'arrêt complet, pour autant que le niveau de vigilance du conducteur soit resté insuffisant jusqu'au bout, le déclenchement d'au moins une alerte visuelle et/ou sonore comprenant le déclenchement d'une première alerte visuelle à l'attention du conducteur, puis le déclenchement d'une seconde alerte visuelle à l'attention du conducteur, différente de la première et qui est plus voyante, ainsi que le déclenchement d'une première alerte sonore, et le procédé comprenant une limitation de l'accélération du véhicule automobile à une valeur paramétrable, mise en œuvre à compter du déclenchement de la seconde alerte visuelle.

La notion de niveau de vigilance est corrélée à celle de non-activité du conducteur. Ce niveau de vigilance permet ainsi de vérifier que le conducteur exerce activement ou non son rôle de surveillance.

Alors, grâce à l'invention, il est prévu de sécuriser l'arrêt du véhicule lorsque le conducteur n'est pas actif, tout d'abord en tentant de rappeler au conducteur son rôle par des alertes visuelles et sonores puis par des à-coups. Si le conducteur ne fait pas montre de plus de vigilance à l'issue de ces rappels, l'invention propose d'arrêter le véhicule au centre de sa voie de circulation, à l'aide seulement des systèmes de régulation de vitesse et de positionnement latéral du véhicule sur sa voie.

La solution proposée présente alors de nombreux avantages.

Toute d'abord, elle permet de respecter les contraintes imposées par les réglementations de sécurité.

Ensuite, elle ne nécessite pas de redévelopper un système TJP, mais elle se superpose à ce dernier, en tant que superviseur. De ce fait, elle est peu onéreuse à mettre en oeuvre.

Elle ne nécessite aucun ajout de capteur supplémentaire sur le véhicule (par rapport à ceux déjà présents dans le cadre de la fonction TJP) et ne nécessite aucune modification matérielle des systèmes électroniques du véhicule, de sorte qu'elle est peu coûteuse.

Elle assure une grande sécurité aux passagers du véhicule qui en est équipé.

Enfin, elle est compatible avec tout type de système permettant de détecter une non-activité du conducteur.

D'autres caractéristiques avantageuses et non limitatives du procédé de pilotage conforme à l'invention, prises individuellement ou selon toutes les combinaisons techniquement possibles, sont les suivantes :
- le niveau de vigilance est insuffisant si le conducteur n'a pas ses mains sur un volant du véhicule automobile ;
- chaque à-coup de freinage présente une durée et/ou une intensité qui varient en fonction de la vitesse du véhicule automobile ;
- ladite vitesse est celle mesurée avant que la série d'à-coups ne soit exécutée ;
- à l'étape de freinage du véhicule automobile, il est prévu de commander un système de freinage du véhicule automobile selon une consigne qui varie en fonction de la vitesse du véhicule automobile ;
- la vitesse du véhicule automobile est régulée de manière automatique par une première fonction d'aide à la conduite ;
- le véhicule automobile est doté d'une seconde fonction de freinage automatique d'urgence.
- chaque à-coup de freinage est commandé par un calculateur assurant la première fonction d'aide à la conduite, au moyen d'un signal utilisant la seconde fonction de freinage automatique d'urgence ;
- il est prévu de limiter l'accélération du véhicule automobile à une valeur limite lorsqu'un délai déterminé s'est écoulé depuis le déclenchement de l'alerte visuelle et/ ou sonore ;
- ladite valeur limite est paramétrable et dépend de la vitesse du véhicule automobile ;
- la vitesse du véhicule automobile est régulée de manière automatique par un calculateur de manière à conserver une distance de sécurité avec un éventuel véhicule cible qui précéderait le véhicule automobile sur sa voie de circulation ;
- ladite valeur limite n'est pas la même selon que le calculateur régule la vitesse en tenant compte d'un véhicule cible ou non ;
- le délai entre l'instant où le conducteur a lâché le volant et l'instant où une alerte visuelle et une alerte sonore sont simultanément déclenchées est inférieur à une durée réglementaire, par exemple égale à 30 secondes.

L'invention propose également un véhicule automobile comprenant un groupe motopropulseur, un système de freinage, un système de direction, et une unité électronique adaptée à mettre en œuvre un procédé de pilotage tel que précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

La description qui va suivre en regard des dessins annexés, donnés à titre d'exemples non limitatifs, fera bien comprendre en quoi consiste l'invention et comment elle peut être réalisée.

Sur les dessins annexés :
[Fig.1] est une vue schématique d'un véhicule automobile conforme à l'invention ;
[Fig.2] est une vue schématique d'une une unité électronique de traitement 11 du véhicule automobile de la [Fig.1] ;
[Fig.3] est un chronogramme illustrant les états de fonctionnalités du véhicule automobile de la [Fig.1] ;
[Fig.4] est un graphique illustrant les variations d'un niveau de sécurité employé dans le cadre de la mise en œuvre d'un procédé de pilotage conforme à l'invention ;
[Fig.5] est un ensemble de graphiques illustrant les variations de paramètres employés dans le cadre d'une fonctionnalité de régulateur adaptatif de vitesse équipant le véhicule automobile de la [Fig.1] ;
[Fig.6] est un ensemble de graphiques illustrant les variations de paramètres employés dans le cadre d'une fonctionnalité d'aide au maintien sur la voie équipant le véhicule automobile de la [Fig.1] ;
[Fig.7] est un schéma-bloc illustrant un algorithme de calcul d'une accélération de consigne utilisé dans le cadre du procédé de la [Fig.4] ;
[Fig.8] illustre en détail l'une des blocs du schéma-bloc de la [Fig.7].

A titre préliminaire, on notera que le terme « automatique » sera dans le présent exposé utilisé pour qualifier une action lorsque cette dernière est réalisée par une unité électronique de traitement, sans intervention humaine.

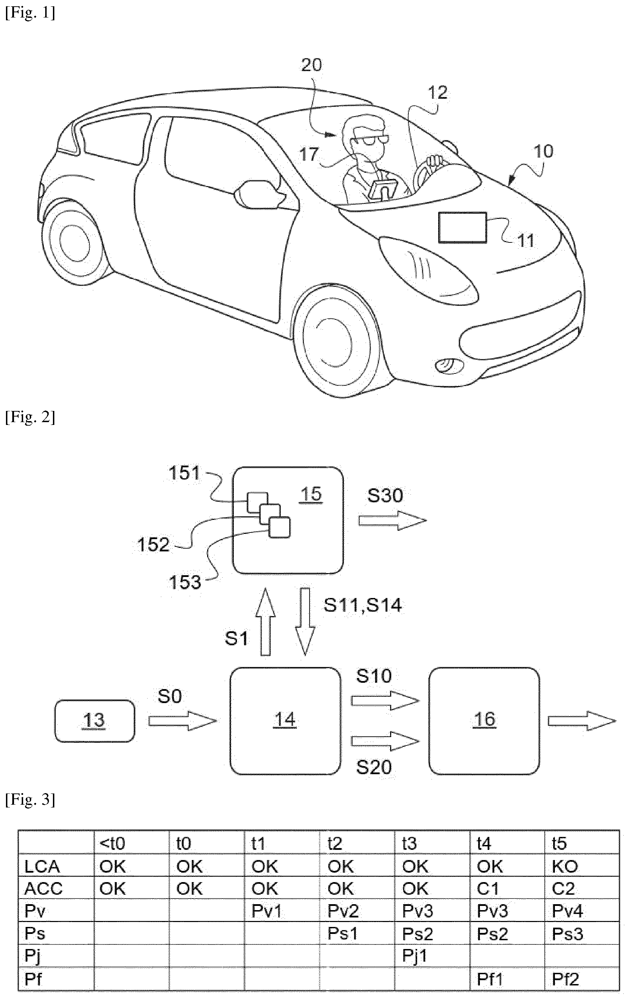

Sur la [Fig.1], on a représenté un véhicule 10 automobile adapté à mettre en œuvre l'invention.

Il s'agit ici d'une voiture. En variante, il pourrait s'agir d'un autre type de véhicule (camion, tracteur...).

Ici, ce véhicule 10 comporte classiquement un habitacle dans lequel se trouve notamment un siège pour le conducteur 20 du véhicule, une planche de bord et un volant 12.

Ce véhicule 10 comporte un groupe motopropulseur, un système de freinage et un système de direction permettant de faire tourner le véhicule (non visibles sur la figure). Classiquement, le système de direction comporte un actionneur de direction assistée pilotable électroniquement, le groupe motopropulseur comporte un actionneur de commande de moteur pilotable électroniquement, et le système de freinage comporte un actionneur de freinage pilotable électroniquement.

Ce véhicule 10 est en outre équipé d'au moins une interface homme-machine. En pratique, la planche de bord intègre un écran d'affichage (17) et au moins un haut-parleur (non visible).

Le véhicule 10 comporte par ailleurs une unité électronique de traitement 11 qui comporte plusieurs calculateurs (microprocesseurs ou microcontrôleurs), des mémoires et des interfaces d'entrée et de sortie.

Grâce à ses interfaces d'entrée, l'unité électronique de traitement 11 est adaptée à recevoir différentes données d'entrée, qui proviennent de capteurs ou de calculateurs tiers.

Elle est notamment adaptée à recevoir une ou plusieurs données relatives au niveau de distraction du conducteur 20. Ici, on considérera qu'elle reçoit une donnée relative à la tenue ou non du volant 12 par le conducteur.

Elle reçoit également d'autres données d'entrée, telles que par exemple :
- la vitesse V du véhicule 10 (mesurée par exemple par un capteur situé sur un axe de roue du véhicule),
- la distance séparant le véhicule 10 d'un véhicule qui le précède sur la route (ci-après appelé « véhicule cible ») et
- la vitesse de ce véhicule cible (cette distance et cette vitesse étant par exemple mesurées par un capteur de télémétrie situé à l'avant du véhicule).

Grâce à ses interfaces de sortie, l'unité électronique de traitement 11 est adaptée à commander l'interface homme-machine afin de fournir au conducteur des informations. Elle est également adaptée à commander l'actionneur de direction assistée, l'actionneur de commande de moteur, et l'actionneur de freinage.

Grâce à ses mémoires, l'unité électronique de traitement 11 mémorise une application informatique, constituée de programmes d'ordinateur comprenant des instructions dont l'exécution par les calculateurs permet la mise en œuvre du procédé décrit ci-après.

Sur la [Fig.2], on a représenté de façon schématique cette unité électronique de traitement 11. On y observe qu'elle comporte ici quatre calculateurs distincts, dont un calculateur HOD 13, un calculateur LCA 14, un calculateur ACC 15 et un calculateur IHM 16.

Ici, ces calculateurs sont matériellement distincts les uns des autres, mais en variante, plusieurs d'entre eux pourraient être matériellement combinés en un seul et même processeur.

Le calculateur IHM 16 permet de commander l'écran et les haut-parleurs, compte tenu des informations reçues du calculateur LCA 14.

Le calculateur HOD 13 est conçu pour détecter le niveau de vigilance du conducteur, c'est-à-dire son degré d'activité dans le cadre de la surveillance de la progression de son véhicule 10 sur la route. En pratique, il est ici conçu pour déterminer en boucle (c'est-à-dire à intervalles de temps réguliers) si le conducteur 20 tient ou non le volant 12 avec l'une au moins de ses mains.

La solution technique retenue pour réaliser cette détection ne fait pas l'objet de la présente invention, si bien qu'elle ne sera pas ici décrite. Elle pourrait d'ailleurs être de tout type (détections de couple résistif sur le volant, détection des mains...) et utiliser tout type de méthode (réseau de neurones, logique floue...). On retiendra seulement que ce calculateur HOD 13 permet de transmettre un signal S0 au calculateur LCA 14. Ici, ce signal S0 est égal à 0 lorsque le conducteur ne tient pas le volant 12 et égal à 1 sinon.

Le calculateur LCA 14 est conçu pour mettre en œuvre une fonction LCA de suivi automatique du centre de la voie par le véhicule 10 (de l'anglais « Lane-Centering Assist »). Ici encore, la solution technique retenue pour réaliser cette fonction ne fait pas l'objet de la présente invention, si bien qu'elle ne sera pas décrite. Elle consistera par exemple à détecter les bords de la voie de circulation du véhicule et à émettre vers l'actionneur de direction assistée un signal S20 de braquage des roues de façon que le véhicule reste au centre de sa voie de circulation.

Le calculateur ACC 15 est conçu pour mettre en œuvre une fonction ACC de régulation automatique et adaptative de vitesse (de l'anglais « Adaptative Cruise Control »). Une telle fonction permet, lorsque le conducteur a saisi une consigne de vitesse souhaitée (par exemple une valeur de vitesse telle que 80 km/h, ou un souhait de rouler à la vitesse maximum autorisée sur la route empruntée), de réguler la vitesse du véhicule 10 de façon à ce qu'elle reste égale à cette consigne tant que cela est possible, et qu'elle baisse lorsque cela n'est plus possible (par exemple si le véhicule cible roule à une vitesse réduite). La solution technique retenue pour réaliser cette fonction sera décrite plus en détail plus loin. On pourra seulement noter à ce stade que ce calculateur ACC 15 reçoit en entrée des données relatives au conducteur, au véhicule 10 et au véhicule cible, et qu'il est en mesure de fournir en sortie un signal S30 de commande des actionneurs de commande du groupe motopropulseur et des moyens de freinage.

Comme le montre la [Fig.2], ce calculateur ACC 15 comporte trois contrôleurs logiciels 151, 152, 153.

Le premier est appelé « contrôleur de distance 151 ». Il permet de prendre en compte la distance entre le véhicule 10 et le véhicule cible, la consigne de vitesse souhaitée saisie par le conducteur et d'éventuelles autres données (présence prochaine d'un rond-point...) afin d'en déduire une vitesse de consigne Cv.

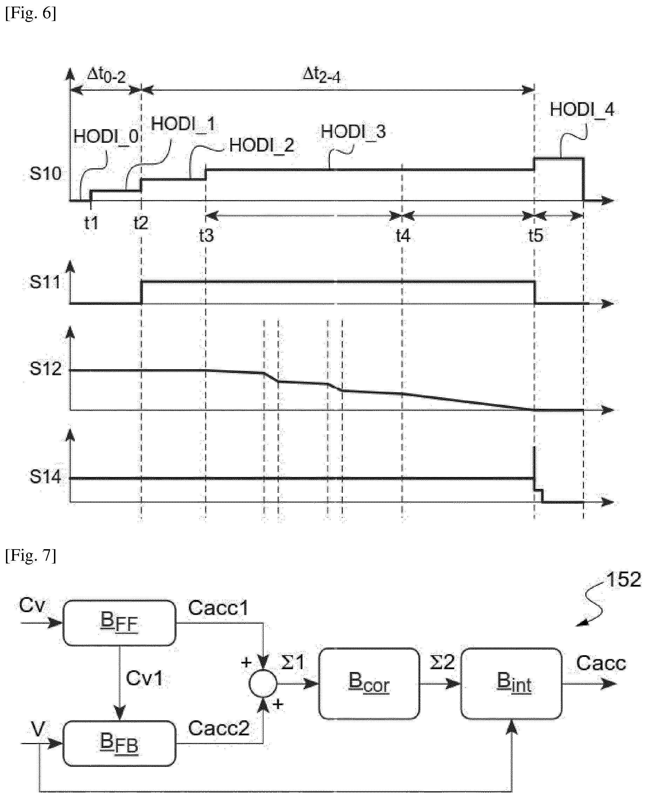

Le second est appelé « contrôleur de vitesse 152 ». Il permet, à l'aide d'une boucle fermée, de modéliser la dynamique du véhicule 10 et de transformer la vitesse de consigne Cv en une accélération de commande Cacc (voir [Fig.7]).

Le troisième est appelé « contrôleur de couple 153 ». Il permet de transformer l'accélération de commande Cacc en un couple au niveau de roues, en prenant généralement en compte les différentes forces qui s'exercent sur le véhicule (pente, vent, inertie moteur...).

Les fonctions ACC et LCA sont employées de manière combinée pour mettre en œuvre une fonction plus générale d'aide à la circulation à basse vitesse dans des embouteillages, ci-après appelée fonction TJP (de l'anglais « Trafic Jam Pilot »).

Cette fonction globale TJP permet au conducteur de partiellement déléguer la conduite du véhicule à l'unité électronique de traitement 11 lorsque le trafic routier est dense et que la vitesse moyenne du véhicule 10 est réduite (typiquement inférieure à 60 km/h).

On souhaite alors implémenter sur cette fonction globale TJP une fonctionnalité MRM (de l'anglais « Minimum Risk Maneuver ») permettant de rappeler au conducteur, en cas de besoin, qu'il doit rester attentif afin d'être en mesure de reprendre les commandes du véhicule si cela s'avérait nécessaire, et de commander l'arrêt automatique du véhicule en cas d'inactivité du conducteur sur une grande durée.

Cette fonction MRM se déroule ici selon une séquence temporelle prédéterminée (ci-après appelée séquence MRM). Cette séquence est prévue pour laisser la possibilité au conducteur de lâcher le volant pendant une durée réduite sans déclencher d'action, puis pour demander au conducteur de reprendre en main le volant 12 puis, s'il ne l'a toujours pas repris en main, pour commander l'arrêt du véhicule.

Sur la [Fig.3], on a représenté en détail la séquence MRM que doit mettre en œuvre l'unité électronique de traitement 11 en cas d'inactivité du conducteur 20.

Pour décrire cette séquence MRM, on considérera tout d'abord qu'à l'état initial (avant l'instant t0), la fonction globale TJP est active (les fonctions ACC et LCA étant alors toutes deux activées). On considérera également que pendant l'ensemble de cette séquence MRM, depuis l'instant t0 jusqu'à l'instant t5, le conducteur lâche le volant et ne le reprend pas en main.

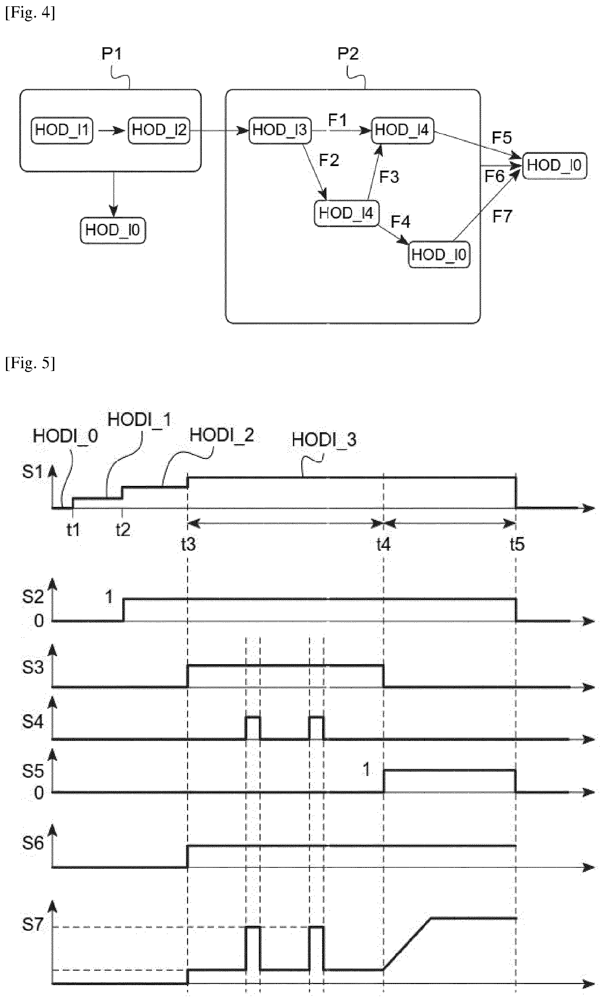

On verra ensuite, en référence à la [Fig.4], comment est gérée la reprise en main du volant 12 par le conducteur 20 lorsqu'elle intervient au cours de la séquence MRM.

Comme le montre la [Fig.3], à l'instant t0 de lâché du volant, le calculateur HOD 13 détecte ce lâchée, ce qui se traduit par une variation du signal S0 précité. Dès lors, le calculateur LCA 14 surveille la durée écoulée depuis que le conducteur 20 a lâché son volant.

Pendant une durée Δt₀₋₁ déterminée (entre les instants t0 et t1), aucune action n'est entreprise par l'unité électronique de traitement 11, ce qui permet en pratique au conducteur de lâcher pendant un court instant le volant sans que cela n'entraîne de conséquence. Cette phase initiale est appelée phase HOD0 et correspond à un niveau de sécurité référencé HOD_l0.

Passé cette première durée Δt₀₋₁, à l'instant t1, il est prévu que le calculateur IHM 16 génère un premier signal Pv1 pour émettre une première alerte visuelle à l'attention du conducteur 20. Cette phase, dont la durée est notée durée Δt₁₋₂, est appelée phase HOD1 et correspond à un niveau de sécurité référencé HOD_l1.

A un instant t2 suivant, le calculateur IHM 16 génère un second signal Pv2 pour émettre une seconde alerte visuelle à l'attention du conducteur 20, qui est différente de la première et qui est plus voyante. Il génère en outre un signal Ps1 pour émettre une première alerte sonore. Cette phase, dont la durée est notée durée Δt₂₋₃, est appelée phase HOD2 et correspond à un niveau de sécurité référencé HOD_l2.

A l'instant t3, le calculateur IHM 16 génère un signal Pv3 pour émettre une troisième alerte visuelle à l'attention du conducteur 20, qui est différente des deux précédentes et qui est plus voyante encore. Il génère en outre un signal Ps2 pour émettre une seconde alerte sonore plus perceptible par le conducteur 20 que la précédente. Le calculateur ACC génère en outre un signal Pj1 pour générer deux à-coups de freinage. Cette phase est appelée phase HOD3a. Elle constitue la dernière chance de rappeler au conducteur 20 qu'il doit tenir le volant 12 avant de freiner le véhicule.

On notera ici que la notion d'à-coup de freinage fait référence à un freinage brusque (suffisamment pour être ressenti par les passagers du véhicule) et momentané (de durée inférieure à trois secondes).

Les « à-coups » de freinage peuvent prendre plusieurs valeurs, en fonction de l'intensité souhaitée. Il peut s'agir d'un à coup de niveau 1 (0,4 G), 2 (0,6 G), 3 (0,8 G), 4 (1 G) ou 5 (1,2 G).

Le niveau utilisé variera en fonction de la vitesse du véhicule (ici de la vitesse du véhicule au début de la séquence). A titre d'exemple, on utilisera le niveau 1 à moins de 32 km/h, puis le niveau 2 jusqu'à 85 km/h, puis le niveau 3 jusqu'à 120 km/h et le niveau 4 au-delà.

La durée totale de cette phase d'à-coups (et de chaque à-coup) est modifiable. Elle est par exemple la suivante : premier à-coup de 1 seconde, suivie d'une durée sans requête d'à-coup de 1,5 seconde, puis un second à-coup de 1 seconde, suivie d'une durée sans requête d'à-coup de 1,5 seconde.

A l'instant t4, le calculateur IHM 16 maintient le signal Pv3 d'émission de la troisième alerte visuelle et le signal Ps2 d'émission de la seconde alerte sonore. Il émet en outre un signal Pf1 d'allumage des feux de détresse du véhicule 10. Le calculateur ACC commande en outre le freinage continu du véhicule 10 jusqu'à son arrêt. Cette phase est appelée phase HOD3b.

Ces deux phases HOD3a et HOD3b forment ensemble une phase qui est notée HOD3, qui correspond à un niveau de sécurité référencé HOD_l3, et qui présente une durée notée durée Δt₃₋₅.

Enfin, à l'instant t5 (généralement au moment où le véhicule s'arrête), le calculateur IHM 16 génère un signal Pv4 d'émission d'une alerte visuelle indiquant au conducteur que la séquence MRM est achevée. Il génère en outre un signal Ps3 d'émission d'une alerte sonore de déconnexion. Il émet par ailleurs un signal Pf2 d'allumage des feux de détresse du véhicule 10 à une fréquence plus grande que précédemment. Le calculateur ACC désactive en outre la fonction ACC en activant le frein parking du véhicule 10. Cette phase est appelée phase HOD4 et correspond à un niveau de sécurité référencé HOD_l4.

Les durées Δt₀₋₁, Δt₁₋₂, Δt₂₋₃ et Δt₃₋₅ sont paramétrables. Elles doivent toutefois répondre à des contraintes réglementaires.

Ici, la première de ces contraintes est que la somme Δt₀₋₂ des durées Δt₀₋₁ et Δt₁₋₂ doit être au maximum égale à 30 secondes.

De la même façon, la somme Δt₂₋₅ des durées Δt₂₋₃ et Δt₃₋₅ doit être au maximum égale à 30 secondes. Dans le cas contraire, il peut être requis de désactiver la fonction LCA avant l'arrêt complet du véhicule 10.

La séquence MRM comporte donc deux parties principales, dont :
- une partie P1 constituée des deux phases HOD1 et HOD2, au cours de laquelle aucun freinage du véhicule n'est commandé (sauf, bien entendu, si l'environnement extérieur le requiert, par exemple parce que le véhicule cible freine), et
- une seconde partie P2 constituée des autres phases.

Pour bien comprendre comment les calculateurs opèrent pendant ces deux parties P1 et P2 distinctes de la séquence MRM, on peut se référer à la [Fig.4].

Lors de la première partie P1, au cours de la phase HOD1 puis au cours de la phase HOD2, le système ACC reste activé (il régule donc la vitesse du véhicule). Le système LCA reste lui aussi activé.

Si, au cours de cette première partie P1, le conducteur 20 reprend le volant 12 en main, la séquence MRM s'achève, si bien que le niveau de sécurité revient à HOD_10. Dans ce cas, les systèmes ACC et LCA restent actif.

Dans le cas contraire, au cours de la seconde partie P2, la phase HOD3 débute. Au cours de cette phase, le système ACC et le système LCA restent activés.

A l'issue de cette phase HOD3, deux situations sont envisageables.

La situation préférée (flèche F1) est celle où le véhicule 10 a pu s'arrêté dans le temps imparti compte tenu des délais réglementaires. Dans ce cas, le niveau de sécurité passe en HOD_l4, le système ACC est suspendu et le système LCA est désactivé.

L'autre situation à envisager (flèche F2), mais qui n'interviendra que de façon exceptionnelle, est celle selon laquelle le véhicule 10 n'a pas pu s'arrêter dans le temps imparti.

Dans cette situation, le niveau de sécurité passe en HOD_l4, le système ACC est maintenu actif (pour continuer à freiner le véhicule) et le système LCA est désactivé.

Puis, si le véhicule s'arrête dans un délai paramétrable ici de 5 secondes, la phase se poursuit comme dans la situation préférée précitée (flèche F3). Dans le cas contraire (flèche F4), passé ce délai paramétrable, le niveau de sécurité passe en HOD_10. Le système ACC reste toutefois maintenu actif (pour continuer à freiner le véhicule) et le système LCA reste désactivé.

On notera que durant cette partie P2 de la séquence MRM :
- si le conducteur reprend le volant 12 en main (flèche F6), ou
- si le véhicule s'arrête après le délai paramétrable de 5 secondes (flèche F7), ou
- si un délai paramétrable par exemple ici encore de 5 secondes s'est écoulé depuis le passage au niveau de sécurité HOD_l4 (flèche F5), alors
le niveau de sécurité redevient HOD_l0, et les système ACC et LCA sont désactivés.

Ainsi, si le conducteur a attendu la seconde partie P2 de la séquence pour réagir, il est forcé à réactiver manuellement le système global TJP s'il souhaite à nouveau en bénéficier.

Les conséquences de cette séquence MRM sur la programmation du calculateur ACC sont les suivants.

Tout d'abord, le calculateur ACC 15 doit interdire toute accélération du véhicule 10 pendant les phases HOD2 et HOD3.

Par ailleurs, le calculateur ACC 15 doit être en mesure de commander deux à-coups pendant la phase HOD3a.

En outre, il doit pouvoir émettre une requête de freinage paramétrable pendant la phase HOD3b afin d'arrêter le véhicule 10.

On notera ici que l'adjectif paramétrable sera employé dans cet exposé pour qualifier une donnée pouvant être calibrée, c'est-à-dire à laquelle il est possible d'affecter une valeur ou un ensemble de valeurs (cette valeur variant par exemple d'un modèle de véhicule à l'autre).

En parallèle, le calculateur ACC 15 doit être programmé pour pouvoir, lorsque le conducteur remet les mains sur le volant pendant la séquence MRM, désactiver la fonction ACC ou la maintenir (selon que cette reprise en main intervient pendant l'une ou l'autres des deux partes P1, P2 de la séquence MRM).

Pour finir, le calculateur ACC 15 doit être en mesure de commander la suspension puis la désactivation de la fonction ACC lorsque le véhicule s'arrête, ainsi que le serrage du frein parking.

Afin d'illustrer les conséquences de la séquence MRM sur la fonction ACC, on a représenté sur la [Fig.5] les variations de différents paramètres.

Le signal S1 est transmis par le calculateur LCA 14 au calculateur ACC 15. Il indique le niveau de sécurité HOD_l0, HOD_l1, HOD_l2, HOD_l3 courant. C'est en effet le calculateur LCA 14 qui sera en charge du calcul de ce niveau de sécurité.

Le signal S2 permet de limiter l'accélération du véhicule 10. Il est égal à 0 pendant les phases HODO et HOD1 (une accélération y encore possible), et est égal à 1 sinon (aucune accélération n'est possible, ou une légère accélération seulement).

Le signal S3 permet de commander un pré-freinage du véhicule 10, c'est-à-dire un freinage léger (typiquement de 0,2 Nm, mais cette valeur est paramétrable) pendant la phase HOD3a.

Le signal S4 permet de commander les deux à-coups de freinage (typiquement avec un couple de 1,5 Nm mais cette valeur est paramétrable et peut dépendre en outre des conditions de roulage) pendant la phase HOD3a.

Le signal S5 commande le freinage du véhicule 10 jusqu'à l'arrêt complet. Il est égal à 0 pendant les phases HODO à HOD3a, et est égal à 1 pendant la phase HOD3b.

Le signal S6 illustre la durée pendant laquelle les moyens de freinage sont actionnés.

Enfin, le signal S7 illustre un exemple de variation de la consigne de couple de freinage envoyée aux moyens de freinage du véhicule.

Les conséquences de la séquence MRM sur le calculateur LCA sont les suivants.

Tout d'abord, le calculateur LCA 14 doit maintenir la fonction LCA activée le plus longtemps possible jusqu'à l'arrêt complet du véhicule de façon à s'assurer que ce dernier reste bien centré sur sa voie de circulation.

Le calculateur LCA, qui s'interpose entre le calculateur HOD 13 et les calculateurs ACC 15 et IHM 16, doit en outre être en mesure de déterminer le niveau de sécurité HOD_l0, HOD_l1, HOD_l2, HOD_l3, HODl_4 courant et de l'indiquer aux calculateurs ACC et IHM.

En parallèle, le calculateur LCA 14 doit être programmé pour, lorsque le conducteur remet les mains sur le volant pendant la séquence MRM, désactiver la fonction ACC ou la maintenir (selon le cas).

Pour finir, le calculateur LCA 14 doit être programmé pour respecter les durées réglementaires précitées de 30 secondes.

Afin d'illustrer les conséquences de la séquence MRM sur la fonction LCA, on a représenté sur la [Fig.6] les variations de différents paramètres.

Le signal S10 est élaboré par le calculateur LCA 14 et il indique le niveau de sécurité HOD_l0, HOD_l1, HOD_l2, HOD_l3, HODl_4 courant.

Le signal S11 est directement déduit du signal S10 précédent. Il indique si le système se trouve en phase de freinage ou non. Il est égal à 0 pendant les phases HODO et HOD1 (partie P1 sans freinage), et égal à 1 sinon (Partie P2 avec freinage).

La courbe S12 illustre un exemple de variation de la vitesse du véhicule 10 pendant la séquence MRM.

Le signal S14 illustre l'état de la fonction ACC, qui est actif jusqu'à la fin de la phase HOD3, puis qui passe dans un état de suspension puis d'arrêt automatique de la fonction ACC avec activation du frein de parking.

En référence à la [Fig.2], on peut ainsi observer que le signal S1 est transmis par le calculateur LCA 14 au calculateur ACC 15.

A l'inverse, pour renseigner le calculateur LCA 14 sur son état, le calculateur ACC 15 transmet à ce dernier les signaux S11 et S14.

Pour renseigner le calculateur IHM 16 sur le niveau de sécurité, le signal S10 est transmis à ce dernier par le calculateur LCA 14.

A ce stade, on notera que pour réduire les dépendances entre les calculateurs ACC et LCA, le signal S11 pourrait être construit directement dans le calculateur LCA, en utilisant le signal S1 et les durées paramétrées des différentes phases HOD1 à HOD4.

On peut maintenant détailler comment le calculateur ACC15 peut être réglé pour assurer la séquence MRM.

Pour cela, on va s'intéresser plus précisément aux signaux S2 et S5. On rappelle que le signal S2 limite toute accélération du véhicule 10 lorsqu'il est égal à 1 et que le signal S5 commande le freinage du véhicule 10 jusqu'à l'arrêt lorsqu'il est égal à 1.

Comme on l'a vu précédemment, le calculateur ACC 15 comporte trois contrôleurs 151, 152, 153.

On peut dans un premier temps expliquer comment le contrôleur de distance 151 prend en compte les contraintes de la séquence MRM pour le calcul de la vitesse de consigne.

Pour prendre en compte ces contraintes, il est nécessaire d'avoir un réglage qui diffère en présence ou l'absence de véhicule cible. Dans la suite, on parlera de présence de véhicule cible lorsque le système ACC régulera la vitesse du véhicule 10 en fonction d'un véhicule cible. A contrario, on parlera d'absence de véhicule cible lorsque le système ACC régulera la vitesse du véhicule 10 sans tenir compte d'un quelconque véhicule cible.

Considérons alors tout d'abord l'éventualité dans laquelle aucun véhicule cible n'est présent.

Dans cette éventualité, lorsque le signal S2 est égal à 1, le contrôleur de distance 151 limite l'accélération du profil de vitesse à une valeur Aₗᵢₘ₁ paramétrable.

Cela permet, par exemple si la consigne de vitesse augmente par ce que la limite de vitesse autorisée passe de 50 à 80 km/h, d'autoriser le véhicule à légèrement accélérer, mais de limiter cette accélération.

Par ailleurs, lorsque le signal S5 est égal à 1, le contrôleur de distance 151 impose une décélération du profil de vitesse égale à une valeur Aₗᵢₘ₂ qui est également paramétrable. On notera que cette valeur peut varier en fonction de la vitesse V du véhicule 10.

Considérons maintenant l'éventualité dans laquelle un véhicule cible est présent.

Dans cette éventualité, lorsque le signal S2 est égal à 1, le contrôleur de distance 151 limite l'accélération du profil de vitesse à une valeur Aₗᵢₘ₃ qui est paramétrable et qui peut être différente de la valeur Aₗᵢₘ₁.

Par ailleurs, lorsque le signal S5 est égal à 1, le contrôleur de distance 151 impose une décélération minimale du profil de vitesse au moins égale à une valeur Aₗᵢₘ₄ qui est également paramétrable et qui peut ici aussi prendre une valeur différente de la valeur Aₗᵢₘ₂. Cette décélération est qualifiée de minimale en ce sens que, si le véhicule cible freine beaucoup, le véhicule 10 peut également freiner en conséquence.

A ce stade, le contrôleur 151 permet donc de calculer une vitesse de consigne Vc.

On peut alors dans un second temps expliquer comment le contrôleur de vitesse 152 prend en compte les contraintes de la séquence MRM pour le calcul d'une accélération de consigne Σ1 et celui de l'accélération de commande Cacc.

Pour bien faire la distinction entre ces deux types d'accélération, on pourra tout d'abord se référer à la [Fig.7].

Cette [Fig.7] représente le contrôleur de vitesse 152 sous la forme d'un schéma-bloc.

On constate que ce contrôleur reçoit en entrée la vitesse de consigne Cv et la vitesse V du véhicule 10 mesurée par le capteur de vitesse.

La vitesse de consigne Cv forme l'entrée d'un bloc de boucle ouverte B_{FF} (en anglais « feedforward ») qui permet d'anticiper l'accélération du profil de vitesse que devrait présenter le véhicule 10 pour suivre cette consigne Cv. Ce bloc permet donc de déterminer une pré-consigne d'accélération en boucle ouverte Cacc1 ainsi qu'une pré-consigne de vitesse en boucle ouverte Cv1.

La vitesse V mesurée forme quant à elle l'entrée d'un bloc de boucle de rétroaction B _{FB} (en anglais « feedback ») qui permet de corriger toute erreur en tenant compte de la vitesse réelle du véhicule. Il pourrait typiquement s'agir d'un correcteur de type PID (proportionnel, intégral, dérivé). Ce bloc permet donc de déterminer une pré-consigne d'accélération en boucle fermée Cacc2.

Les deux pré-consignes d'accélération en boucle ouverte Cacc1 et fermée Cacc2 sont ensuite ajoutées l'une à l'autre par un sommateur, et cette somme Σ1 entre dans un bloc de corrections B_{cor}. Ce bloc permet par exemple de lisser le profil d'accélération si un mode de conduite économique a été sélectionné par le conducteur.

A la sortie de ce bloc de corrections, la somme de pré-consignes corrigée Σ2 entre dans un bloc interne Bᵢₙₜ modélisant les caractéristiques dynamiques du véhicule 10. Ce bloc permet alors de déterminer l'accélération de commande Cacc.

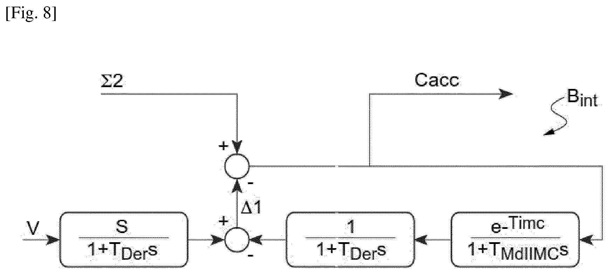

La structure du bloc interne Bᵢₙₜ est représentée en détail sur la [Fig.8].

On y observe que l'accélération de commande Cacc est égale à la différence entre la somme de pré-consignes corrigée Σ2 et un terme Δ1.

Ce terme Δ1 est lui-même égal à la différence entre :
- une première variable issue de la vitesse V mesurée, filtrée par un premier filtre passe-bas (ici du premier ordre), et
- une seconde variable issue de l'accélération de commande Cacc calculée aux pas de temps précédents, filtrée par un second filtre passe-bas (ici du second ordre, faisant intervenir un délai « Time » pour tenir compte du temps de latence de la chaîne de commande des actionneurs).

Autrement formulé, ce terme Δ1 correspond à la différence entre le retour d'une boucle fermée de rétroaction qui est issue du modèle dynamique du véhicule (en d'autres termes l'accélération attendue suite à notre commande) et une variable calculée en fonction de la dynamique réelle du véhicule (en d'autres termes l'accélération réelle du véhicule).

A ce stade, on comprend donc que l'accélération de commande Cacc est celle qui est véritablement utilisée pour commander les actionneurs, tandis que l'accélération de consigne (à savoir la somme Σ1) correspond à l'accélération souhaitée avant correction et indépendamment du modèle dynamique du véhicule.

On peut alors maintenant expliquer comment le contrôleur de vitesse 152 prend en compte les contraintes de la séquence MRM pour le calcul de l'accélération de consigne Σ1 et de l'accélération de commande Cacc.

Cette fois, il ne sera plus nécessaire de distinguer le cas où un véhicule cible se trouve devant le véhicule 10 du cas où aucun véhicule cible n'est présent.

Pour déterminer l'accélération de consigne Σ1 lorsque le signal S2 est égal à 1, le contrôleur de vitesse 152 limite l'accélération de consigne Σ1 à une valeur maximum Aₘₐₓ₁ paramétrable et pouvant varier selon la vitesse du véhicule.

Pour déterminer l'accélération de consigne Σ1 lorsque le signal S5 est égal à 1, le contrôleur de vitesse 152 limite l'accélération de consigne Σ1 à une valeur maximum Aₘₐₓ₂ qui est paramétrable, qui peut varier selon la vitesse du véhicule, et qui est inférieure à la valeur maximum Aₘₐₓ₁.

Pour déterminer l'accélération de commande Cacc lorsque le signal S2 est égal à 1, le contrôleur de vitesse 152 limite l'accélération de commande Cacc à une valeur maximum Aₘₐₓ₃ qui est paramétrable, qui peut varier selon la vitesse du véhicule, et qui est peut être différente de la valeur maximum Aₘₐₓ₁.

Pour déterminer l'accélération de commande Cacc lorsque le signal S5 est égal à 1, le contrôleur de vitesse 152 limite l'accélération de commande Cacc à une valeur maximum Aₘₐₓ₄ qui est paramétrable, qui peut varier selon la vitesse du véhicule, qui est inférieure à la valeur maximum Aₘₐₓ₁ et qui est peut être différente de la valeur maximum Aₘₐₓ₃.

On comprend qu'avec de telles limitations, il ne sera pas possible de générer des à-coups aussi puissants que souhaité. La solution pour générer ces à-coups, qui sera décrite plus loin, ne passera donc pas par ces limitations mais passera par une voie détournée. En pratique, la valeur du terme Δ1 sera alors maintenue constante pendant les à-coups afin d'éviter de perturber la boucle fermée qui pourrait sinon diverger.

On peut dans un troisième et dernier temps expliquer comment le contrôleur de couple 153 prend en compte les contraintes de la séquence MRM pour le calcul du couple de consigne pendant la partie P2 de la séquence MRM.

Ici, l'idée consiste à définir un profil du couple de consigne de freinage qui varie selon la courbe S7 représentée sur la [Fig.5].

Dès lors, le couple de freinage doit varier en restant sur cette courbe ou au-dessus de celle-ci (par exemple si le véhicule cible freine fortement).

L'objectif est que ce profil de freinage soit indépendant des conditions extérieures ayant un impact sur l'accélération du véhicule (vent, pente, inertie moteur...). L'idée est en effet d'éviter de demander une augmentation du couple moteur parce que la pente de la route augmente fortement, même si cela implique une décélération du véhicule.

Ainsi, contrairement au cas général où la fonction ACC prévoit de calculer la consigne de couple en tenant compte de ces conditions extérieures, pendant la séquence MRM, la consigne de couple calculée est indépendante de ces conditions.

Comme expliqué ci-dessus, la fonction ACC étant un système de confort, les décélérations pouvant être commandées par ce système sont nécessairement limitées en amplitude, ce qui ne permet pas de commander des à-coups puissants. Pour cette raison, il est ici prévu que le calculateur ACC 15 soit adapté à générer un signal exogène, c'est-à-dire un signal non conforme à la norme ACC, mais plutôt un signal AEB de commande automatique du freinage d'urgence (de l'anglais « Autonomous Emergency Braking »). Un tel signal peut être transmis au système de freinage du véhicule par un chemin différent des signaux émis dans le cadre de la fonction ACC. De cette façon, les à-coups sont commandés par un chemin de communication différent de celui emprunté pour commander la décélération du véhicule jusqu'à son arrêt complet.

Ici, comme expliqué supra, l'intensité et la durée de chacune des deux décélérations générant les à-coups sont paramétrables, de préférence avec 5 niveaux d'intensité. Ces deux paramètres peuvent en outre dépendre de la vitesse V du véhicule 10.

## Revendications

1. Procédé de pilotage d'un véhicule automobile (10) comprenant, lorsque le véhicule automobile (10) roule à une vitesse (V) qui est régulée de manière automatique et que la position latérale du véhicule automobile (10) dans sa voie de circulation est pilotée de manière automatique, une opération d'acquisition en boucle d'un niveau de vigilance (S0) du conducteur (20) du véhicule automobile (10), puis, si le niveau de vigilance (S0) est insuffisant, des étapes de :
- déclenchement d'au moins une alerte visuelle et/ou sonore, puis, si le niveau de vigilance (S0) reste insuffisant après une première durée déterminée,
- génération d'une série d'au moins un à-coup de freinage, puis, si le niveau de vigilance (S0) reste insuffisant après une deuxième durée déterminée,
- freinage du véhicule automobile (10) jusqu'à l'arrêt si le niveau de vigilance (S0) reste insuffisant,
**caractérisé en ce que** le déclenchement d'au moins une alerte visuelle et/ou sonore comprend le déclenchement d'une première alerte visuelle à l'attention du conducteur, puis le déclenchement d'une seconde alerte visuelle à l'attention du conducteur, différente de la première et qui est plus voyante, ainsi que le déclenchement d'une première alerte sonore, et **en ce que** le procédé comprend une limitation de l'accélération du véhicule automobile (10) à une valeur paramétrable (Aₗᵢₘ₁ ; Aₗᵢₘ₃), mise en oeuvre à compter du déclenchement de la seconde alerte visuelle.

2. Procédé de pilotage selon la revendication précédente, dans lequel le niveau de vigilance (S0) est insuffisant si le conducteur (20) n'a pas ses mains sur un volant (12) du véhicule automobile (10).

3. Procédé de pilotage selon l'une des revendications précédentes, dans lequel chaque à-coup de freinage présente une durée et/ou une intensité qui varient en fonction de la vitesse du véhicule automobile (10), ladite vitesse étant préférentiellement mesurée avant la série d'à-coups.

4. Procédé de pilotage selon l'une des revendications précédentes, dans lequel, à l'étape de freinage du véhicule automobile (10), il est prévu de commander un système de freinage du véhicule automobile (10) selon une consigne qui varie en fonction de la vitesse (V) du véhicule automobile (10).

5. Procédé de pilotage selon l'une des revendications précédentes, dans lequel, la vitesse (V) du véhicule automobile (10) étant régulée de manière automatique par une première fonction d'aide à la conduite, le véhicule automobile (10) étant doté d'une seconde fonction de freinage automatique d'urgence, chaque à-coup de freinage est commandé par un calculateur (15) assurant la première fonction d'aide à la conduite, au moyen d'un signal utilisant la seconde fonction de freinage automatique d'urgence.

6. Procédé de pilotage selon l'une quelconque des revendications précédentes, dans lequel ladite valeur paramétrable de l'accélération dépend de la vitesse (V) du véhicule automobile (10).

7. Procédé de pilotage selon l'une des revendications précédentes, dans lequel, la vitesse (V) du véhicule automobile (10) étant régulée de manière automatique par un calculateur (15) de manière à conserver une distance de sécurité avec un éventuel véhicule cible qui précéderait le véhicule automobile (10) sur sa voie de circulation, ladite valeur limite n'est pas la même selon que le calculateur régule la vitesse (V) en tenant compte d'un véhicule cible ou non.

8. Procédé de pilotage selon l'une des revendications précédentes, dans lequel le délai (Δt₀₋₂) entre l'instant (t0) où le conducteur (20) a lâché le volant (12) et l'instant (t2) où une alerte visuelle et une alerte sonore sont simultanément déclenchées est inférieur à une durée réglementaire, par exemple égale à 30 secondes.

9. Véhicule automobile (10) comprenant un groupe motopropulseur, un interface homme-machine, un système de freinage et un système de direction, **caractérisé en ce qu'**il comporte une unité électronique (11) adaptée à mettre en oeuvre un procédé de pilotage conforme à l'une des revendications précédentes.

## Patentansprüche

1. Verfahren zur Steuerung eines Kraftfahrzeugs (10), das, wenn das Kraftfahrzeug (10) mit einer automatisch geregelten Geschwindigkeit (V) fährt und wenn die seitliche Position des Kraftfahrzeugs (10) in seiner Fahrspur automatisch gesteuert wird, einen Vorgang des Erfassens in einer Schleife eines Wachsamkeitsgrades (S0) des Fahrers (20) des Kraftfahrzeugs (10) und anschließend, wenn der Wachsamkeitsgrad (S0) unzureichend ist, die folgenden Schritte aufweist:
- Auslösen mindestens eines optischen und/oder akustischen Alarms, wenn der Wachsamkeitsgrad (S0) nach einer ersten festgelegten Zeit weiterhin unzureichend ist,
- Erzeugen einer Reihe von mindestens einem Bremsstoß, wenn der Wachsamkeitsgrad (S0) nach einer zweiten festgelegten Zeit immer noch unzureichend ist,
- Abbremsen des Kraftfahrzeugs (10) bis zum Stillstand, wenn der Wachsamkeitsgrad (S0) weiterhin unzureichend ist,
**dadurch gekennzeichnet, dass** das Auslösen mindestens eines optischen und/oder akustischen Alarms das Auslösen eines ersten optischen Alarms zur Warnung des Fahrers und anschließend das Auslösen eines zweiten optischen Alarms zur Warnung des Fahrers beinhaltet, der sich vom ersten unterscheidet und auffälliger ist, sowie das Auslösen eines ersten akustischen Alarms, und dass das Verfahren eine Begrenzung der Beschleunigung des Kraftfahrzeugs (10) auf einen einstellbaren Wert (Aₗᵢₘ₁; Aₗᵢₘ₃) aufweist, der ab dem Auslösen des zweiten optischen Alarms umgesetzt wird.

2. Verfahren zur Steuerung nach dem vorhergehenden Anspruch, wobei der Wachsamkeitsgrad (S0) unzureichend ist, wenn der Fahrer (20) seine Hände nicht am Lenkrad (12) des Kraftfahrzeugs (10) hat.

3. Verfahren zur Steuerung nach einem der vorhergehenden Ansprüche, wobei jeder Bremsstoß eine Dauer und/oder Intensität aufweist, die in Abhängigkeit von der Geschwindigkeit des Kraftfahrzeugs (10) variieren, wobei die Geschwindigkeit vorzugsweise vor der Reihe von Bremsstößen gemessen wird.

4. Verfahren zur Steuerung nach einem der vorhergehenden Ansprüche, wobei im Schritt des Abbremsens des Kraftfahrzeugs (10) vorgesehen ist, ein Bremssystem des Kraftfahrzeugs (10) gemäß einem Sollwert zu steuern, der in Abhängigkeit von der Geschwindigkeit (V) des Kraftfahrzeugs (10) variiert.

5. Verfahren zur Steuerung nach einem der vorhergehenden Ansprüche, wobei die Geschwindigkeit (V) des Kraftfahrzeugs (10) automatisch durch eine erste Fahrassistenzfunktion geregelt wird, das Kraftfahrzeug (10) mit einer zweiten automatischen Notbremsfunktion ausgestattet ist, und jeder Bremsstoß von einem Rechner (15) gesteuert wird, der die erste Fahrassistenzfunktion gewährleistet, und zwar mittels eines Signals, das die zweite automatische Notbremsfunktion nutzt.

6. Verfahren zur Steuerung nach einem der vorhergehenden Ansprüche, wobei der einstellbare Wert der Beschleunigung von der Geschwindigkeit (V) des Kraftfahrzeugs (10) abhängt.

7. Verfahren zur Steuerung nach einem der vorhergehenden Ansprüche, wobei die Geschwindigkeit (V) des Kraftfahrzeugs (10) automatisch durch einen Rechner (15) so geregelt wird, dass ein Sicherheitsabstand zu einem möglichen Zielfahrzeug, das dem Kraftfahrzeug (10) auf seiner Fahrspur vorausfährt, eingehalten wird, wobei der Grenzwert nicht derselbe ist, je nachdem, ob der Rechner die Geschwindigkeit (V) unter Berücksichtigung eines Zielfahrzeugs regelt oder nicht.

8. Verfahren zur Steuerung nach einem der vorhergehenden Ansprüche, wobei die Zeitspanne (Δt₀₋₂) zwischen dem Zeitpunkt (t0), zu dem der Fahrer (20) das Lenkrad (12) losgelassen hat, und dem Zeitpunkt (t2), zu dem gleichzeitig ein optischer und ein akustischer Alarm ausgelöst werden, kürzer ist als eine vorgeschriebene Dauer, beispielsweise 30 Sekunden.

9. Kraftfahrzeug (10) mit einem Antriebsstrang, einer Mensch-Maschine-Schnittstelle, einem Bremssystem und einem Lenksystem, **dadurch gekennzeichnet, dass** es eine elektronische Einheit (11) aufweist, die dazu ausgelegt ist, ein Verfahren zur Steuerung nach einem der vorhergehenden Ansprüche auszuführen.

## Claims

1. Method of control of a motor vehicle (10) comprising, when the motor vehicle (10) is driving at a speed (V) which is automatically regulated and the lateral position of the motor vehicle (10) in its traffic lane is automatically controlled, a looped operation of acquiring a level of vigilance (S0) of the driver (20) of the motor vehicle (10), then, if the level of vigilance (S0) is insufficient, steps of:
- triggering at least one visual and/or sonic alert, then, if the level of vigilance (S0) remains insufficient after a first determined length of time,
- generating a series of at least one jerk of the brakes, then, if the level of vigilance (S0) remains insufficient after a second determined length of time,
- braking the motor vehicle (10) to a standstill if the level of vigilance (S0) remains insufficient, **characterized in that** the step of triggering at least one visual and/or sonic alert comprises triggering a first visual alert intended for the driver and then triggering a second visual alert intended for the driver, said second visual alert being different from the first visual alert and more visible, and triggering a first sonic alert, and **in that** the method comprises a limitation of the acceleration of the motor vehicle (10) to a parameterizable value (Aₗᵢₘ₁; Aₗᵢₘ₃), implemented starting from the moment when the second visual alert is triggered.

2. Control method according to the preceding claim, wherein the level of vigilance (S0) is insufficient if the driver (20) does not have his hands on a steering wheel (12) of the motor vehicle (10).

3. Control method according to either of the preceding claims, wherein each jerk of the brakes has a duration and/or an intensity that vary/varies as a function of the speed of the motor vehicle (10), said speed preferably being measured before the series of jerks.

4. Control method according to any of the preceding claims, wherein, in the step of braking the motor vehicle (10), provision is made to command a braking system of the motor vehicle (10) according to a setpoint that varies as a function of the speed (V) of the motor vehicle (10).

5. Control method according to any of the preceding claims, wherein, the speed (V) of the motor vehicle (10) being automatically regulated by an advanced-driver-assistance first function, the motor vehicle (10) being equipped with an autonomous-emergency-braking second function, each jerk of the brakes is commanded by a computer (15) performing the advanced-driver-assistance first function, by means of a signal using the autonomous-emergency-braking second function.

6. Control method according to any of the preceding claims, wherein said parameterizable value of the acceleration depends on the speed (V) of the motor vehicle (10).

7. Control method according to any of the preceding claims, wherein, the speed (V) of the motor vehicle (10) being regulated automatically by a computer (15) so as to maintain a safe distance from a potential target vehicle preceding the motor vehicle (10) in its traffic lane, said limiting value differs depending on whether the computer is regulating the speed (V) to take account of a target vehicle or not.

8. Control method according to any of the preceding claims, wherein the delay (Δt₀₋₂) between the time (t0) when the driver (20) let go of the steering wheel (12) and the time (t2) when a visual alert and a sonic alert are simultaneously triggered is less than a regulatory length of time, for example equal to 30 seconds.

9. Motor vehicle (10) comprising a power train, a human-machine interface, a braking system and a steering system, **characterized in that** it comprises an electronic unit (11) configured to implement a control method according to any of the preceding claims.
